# EUROPEAN PATENT APPLICATION

(11) **EP 2 255 672 A1**
(43) Date of publication of application: **01.12.2010**
(21) Application number: 09007116.8
(22) Date of filing: 28.05.2009
(51) Int. Cl.: A23G 9/08, A23G 9/22, A23G 9/26, A23G 9/48

(54) **Process and apparatus for producing multi-layer frozen confections**

(71) Applicant: Tiesnitsch Beheer B.V., 6573 GB Beek Ubbergen (NL)
(72) Inventor: Tiesnitsch, Johannes Ijsbrand, 6573 GB Beek Ubbergen (NL); Martens, Johannes Cornelis Antonius, 6573 GB Beek Ubbergen (NL)

(57) **Abstract**

Process for producing multl-layer frozen confections, comprising the steps of
a. filling a first mold, having a mold bottom, mold walls and an open mould top, at least partly with at least one first substance to be frozen;
b. freezing said at least one substance into a frozen part;
c. releasing said frozen part from the first mold;
d. positioning said frozen part in the first mold or in a further mold having a mold bottom, mold walls and an open mold top, leaving room between the frozen part and the mold bottom and mold walls;
e. feeding at least one further substance to be frozen into the first mold during or after step d) or into the further mold before, during or after step d);
f. freezing said substances into a unitary frozen confection; and
g. releasing said unitary frozen confection from the first or further mold, wherein the molds are filled through at least one opening In the mold walls or the mold bottom and apparatus for producing pieces of frozen substance, in particular multilayer frozen confections.

## Description

The invention relates to a process and apparatus for producing multi-layer frozen confections.

Such process is known from US Patent 2,123,215. The process applied there comprises filling a mold from the top consecutively with two substances to be frozen, freezing the substances, taking the frozen mass obtained from the mold, filling a second mold from above with a third substance, pushing the frozen mass in the second mold into the third substance to form an outer layer of the third substance and freezing the total into a unitary frozen confection.

The known method has as a disadvantage that the filling of the molds from the top brings about extensive contact of the substance with air. This may cause oxidation, in particular when the substance is a fruit juice, it may also promote growth of bacteria. Moreover, volatile components, which to a large extent contribute to the flavour and odor of the confection, may escape from the substance. These mechanisms may cause degradation in hygiene, flavour and appearance of the substance to be frozen during the filling process.

Aim of the present invention is to provide a method to produce multilayer frozen confections that prevents this degradation of the substance at least to a large extent.

This aim is achieved in that the process for producing multi-layer frozen confections, comprises the steps of
a. filling a first mold, having a mold bottom, mold walls and an open mould top, at least partly with at least one first substance to be frozen;
b. freezing said at least one substance into a frozen part;
c. releasing said frozen part from the first mold;
d. positioning said frozen part in the first mold or in a further mold having a mold bottom, mold walls and an open mold top, leaving room between the frozen part and the mold bottom and mold walls;
e. feeding at least one further substance to be frozen into the first mold during or after step d) or into the further mold before, during or after step d);
f. freezing said substances into a unitary frozen confection; and
g. releasing said unitary frozen confection from the first or further mold,
wherein the molds are filled through at least one opening in the mold walls or the mold bottom.

Filling the mold through an opening in the mold walls or bottom minimizes contact of the substance with air and thus minimizes the occurrence of the degradation mechanisms that occur in the known process.

Filling the mold through one or more openings In the bottom has the advantage that only small part of the substances comes into contact with the environment, viz. only over their top surface area in the mold.

Filling the mold through one or more openings in the walls, i.e. closer to the top end of the mold, is also possible. In that case the openings preferably are positioned in the wall below the top level the substance will have after filling the mould. Contact of the substances with the environment may be more extensive, though still restricted compared to the known process. Contact with surrounding air may be even further restricted by applying an inert gas, blanket at the open top ends of the molds. The inert gas preferably Is nitrogen.

The opening In the walls or bottom can be connected to a duct coming from containers containing the first and further substances applying a suitable dosing system. Dosing systems for fluid substances, comprising e.g. pumps, ducts and valves, are known per se and can be used in the process according to the Invention.

Molds applicable in the process according to the invention have a bottom and walls and an open top end. The bottom is understood to be the part of the mold opposite to the open top end, whereas the walls extend from the bottom to the open top end, the bottom and walls forming a cavity of a desired shape having an open top end. The first mold is filled with an amount of at least one first substance to be frozen. This substance preferably is in fluid form. It may contain small particles like fruit fibers or pulp or particles found in pressed fruit juice. If such particles are present the dimensions of the dosing ducts and the filling openings will be chosen to prevent clogging thereof by the particles. The mold may be filled with one fluld substance or with more than one fluid substance to obtain a mixed multi-substance core. The total amount corresponds with the desired size of the core. The first substance is frozen then by cooling the mold, e.g. by a cooling substance surrounding the outer side of the mould. It is also possible for the mold to contain cooling liquid ducts through which cooling liquid is flowing. Also other known techniques for freezing from the outside an amount of liquid in a mold can be applied in the process according to the invention. The mold preferably is made of a highly heat conductive material, e.g. a metal.

The substance in the first mold thus freezes to a frozen part consisting of the at least one first substance and forming the core of the confection. Said frozen part then is released from the mold. To this end the cooling of the mold will be stopped. To shorten release time and to avoid damage when lifting the frozen part from the mold In which it has been frozen, it may be advantageous to heat the mould bottom and/or walls for a short time, thus loosening the frozen part from the mold. To this end heating means, e.g. electric heating wiring or heating fluid ducts may be present in the mold bottom and/or walls.

The released frozen part is taken then from its position in the first mould and positioned in the first mold or in a further mold at a certain height thus leaving room between the core and the mold bottom and walls. Positioning the frozen part in the first mold requires only lifting the part over a certain distance after it has been released from the mold. Additional manipulation and transport movements are required when the frozen part is positioned in a further mold. In the first or further mold, whichever is used, at least one further substance is introduced in an amount to fill at least partially said room between the mold and the frozen part. This introduction can be done when the frozen part has been positioned in the mold. In that case the room or cavity between the part and the mold bottom and walls is filled with the substance. If a further mold is used , it is also possible to introduce the desired amount of further substance Just before the frozen part is positioned in the further mold. The part then pushes aside the further substance to fill the room between the part and the mold bottom and walls in the final position of the part. The introduction can also take place during or after the positioning of the frozen part In the mold, both when a first and when a further mold is used. As described above for the first substance in the first mold, the further substance is frozen in the mold. The further substance thus forms a unitary confection mass with the frozen part, the further substance forming an outer layer around that part. The amount of further substance may be chosen such that the frozen part is completely covered by the further substance but to keep visible at least part of the frozen part the amount can be chosen such that the top level of the further substance is at most at the same height as the upper level of the part in the mould.

Introducing the further substance after the frozen part has been positioned has the advantage that said part is not subjected to mechanical forces occurring when pushing away the already introduced and, depending on the moment the cooling of the mold starts, possibly already partly becoming frozen further substance.

After the frozen part and the at least one further substance have been frozen Into a unitary frozen confection this confection will have to be released from its mold. To speed up the release process also a further mold preferably is heated.

The steps d) to g) as described above can be repeated to form further outer layers on the confection. Then the unitary frozen confection functions as the frozen part for applying the next layer. Therefore, the wording frozen part if applicable also means a part already coated with one or more outer layers. For applying each outer layer a further mold can be used but it also possible to apply all outer layers in the same first mold. In general in each mold one or more layers can be applied. It is not necessary that all layers are of different substance. If more than two layers are applied around the frozen part, the substance of the part or one of the layers can be present more than one time but each confection comprises at least two different substances.

The form of the mold should be such that by moving a frozen piece in the mold in an upward direction, i.e. in a direction from the bottom to the top end, room between the part and the mold walls is formed over at least part of the surface of the frozen part in order to prevent a vacuum to occur in a cavity between the frozen part and the mold bottom and to allow air to escape from that cavity when the mold is filled. Preferably the area of the cross section of the mold normal to the direction from bottom to open top end increases from bottom to top end. More preferably the mold has a conical form. Lifting the frozen part then creates room everywhere between the part and the bottom and walls of the mould. If for forming the frozen part and the outer layer or outer layers different molds are used, the last mold used must have the shape of the final confection. The molds used in the earlier steps may have a mutually different shape and a shape differing from the final mould. This allows e.g. to have a core part having a surprising shape, that does not show from the shape of the final confection.

Preferably a peg is positioned in the first mold extending Into the at least one first substance to be frozen. This peg allows easy removal of the frozen part and the formed confections and also makes consumption of the confection more comfortable. The peg can be positioned before, during or after the introduction of the at least one substance in the first mold. One of the peg's ends will extend into the at least one first substance before this is completely frozen.

The process according to the Invention allows the consecutive parts, i.e. core and outer layers, to be formed in one and the same mould. In this embodiment it is only required to lift the frozen part over a certain distance to create a room or cavity between said part and the mold bottom and walls matching the desired size dimensions of an outer layer. When the frozen part is or has been lifted to the desired position the at least one further substance can be introduced into the cavity through the opening in the mold walls or bottom. In view of the advantages mentioned, preferably the first and the further substance are frozen in one and the same first mold.

Also here further outer layers can be applied by repeatedly lifting the frozen part to create again room between the frozen part and the mold bottom and walls, followed by introducing an amount of a further substance to fill the cavity.

Using one and the same mold or set of molds for the consecutive layers has the further advantage over the known process that no complex manipulation to move the frozen parts from one mold to another is required. Only a simple lifting movement is sufficient to allow the next layer to be applied.

It is also possible to make thin layers with the process according to the Invention. Thus e.g. thin compatibilizing layers can be applied to allow the combination of substances in consecutive layers that as such would not firmly adhere to one another. This bad adherence would diminish the mechanical strength of the confection produced.

Preferably In the process according to the invention a number of equal molds are filled at the same time from a common substance duct connected to the openings In the mold bottoms or walls. When the fill openings are present in the mold walls their position must be below the upper substance level reached after filling the molds. Only in that case the advantages of easy and accurate dosing and achieving equal substance levels in all molds as described below will be achieved. To the same end the mold bottoms will be positioned in one horizontal plane.

This filling of all molds through one duct increases productivity considerably. Since the openings are In the bottom or in the mold walls it also has the advantage of easier and more accurate dosing of the substances to a number of molds at the same time, with greater accuracy and less difference between the mold fillings. By introducing the preferably fluid substances from the bottom, gravity and hydrostatic pressure guarantee the same surface level of the substance in each mold, so equal amounts of substance in each mold, assumed that all molds filled in one and the same step are equal as they will be in practice. Further, the amount of substance to be Introduced does not have to be adjusted for each mold separately but only the total amount to fill all the molds that are filled at the same time. Thus any inaccuracy in this amount will be divided over the total number of molds, whereas in the known method each mold will have such inaccuracy separately. Also differences in mold volumes will not lead to differences in the filling level between the molds. Thus the process according to the invention requires less complex dosing Installations and equal and accurate filling of all the molds is easily obtained.

The process according to the invention can be used to produce confections from any kind of freezable substances. Examples of these are fruit juices, sherbets, water-Ice, ice cream and other edible, tasty water-containing and in general fluid substances. The viscosity of the substances must allow it to be transported from e.g. a storage container to and into the molds in a desired time by the transport means applied. The skilled person will recognize that the allowable viscosity will depend on e.g. pump capacity, dimension of transport ducts and mold and filling openings dimensions. This allowable viscosity can be established by routine tests In a given equipment. Also the presence of particles in the fluid, as mentioned before, will require adapted equipment.

The invention further relates to an apparatus for producing multi-layer frozen confections comprising at least one set of first molds each having a mold bottom, mold walls and an open mold top, the mold bottoms being positioned in one plane, the molds extending from that plane and each mold having at least one fill opening In its walls or bottom, the opening being connected to a common duct system connectable to at least one storage tank for fluid substances, the apparatus further comprising means for cooling the molds to form pieces of frozen substance in the molds and means for taking pieces of frozen substance from the mold.

The apparatus comprises a set of first molds. The molds preferably are made of a highly heat conductive material. Material having a shape memory may have the advantage that release of frozen parts from the mold can be fast and simple, e.g. by applying an electrical voltage or current to the mold. The number of molds may vary. The larger the number of molds In a set, the more economical the production of frozen confections as a larger number can be produced in one run. The molds are constructed as described above, having a bottom, walls and an open mold top allowing frozen contents to be removed from the mold.

The molds are positioned with respect to each other such that the bottoms of the molds are lying in one plane. The molds extend from that plane In a substantially normal direction to that plane. Under production conditions this plane will be positioned horizontally, the open top end of the molds facing upwards and accordingly the molds will extend vertically from the bottom plane.

The molds have a fill opening in their bottom part or in the wall part. The fill openings are connected to a common duct. Rigid or flexible connection pipes running from each opening to the common duct can establish such connection. Preferably these connection pipes are not unnecessary long so as to keep their volume low. This allows filling all the molds in one run through only one duct. The advantages of accuracy and simplicity of such filling system in practice have been described above In the description of the process and are brought about by the chosen construction of the apparatus.

A further constructional advantage of having the filling system connected to the mold bottom or walls, rather than having a system for filling the molds from the top, resides in that the open top end of the molds remain accessible for positioning pegs into the mold and for removing the frozen objects from the mold, without having to move or remove a filling system hanging above the molds first.

The common duct system is connectable to at least one storage tank, preferably to at least two storage tanks for fluid substances. Preferably the apparatus comprises means for dosing an amount of substance from each storage tank to the set of moulds. Such dosing means for fluid substances are known in the art. For transporting a substance from a tank to a common duct, known transporting means like a pump will be required and valve means to establish and close off the connection between a tank and the common duct, allowing feeding alternating a different desired substance to the molds. Proper construction and running such transport systems are common and known techniques in the art.

The apparatus further comprises means for taking pieces of frozen substance from the molds. In practice this will be in an upward direction after these pieces have been formed in the molds after cooling. These means can also be applied for positioning pegs into the molds.

The construction of such means is common in the art and they usually are systems of pneumatic or hydraulic nature and provide functions like grabbing, holding and moving, rotating or positioning and releasing objects.

In the new apparatus the means will allow grabbing and positioning pegs into the molds and, by grabbing the same pegs, moving frozen substances in a vertical direction to create between the frozen substance and the mold bottom and walls the room for a next layer of another substance to be introduced into the molds. After a desired number and type of layers has been applied the means allow removing the final frozen confections from the molds for further handling like packaging. Systems for this further handling are known in the art and do not form part of this invention.

In the embodiment with one set of molds the shape of the molds is that of a desired frozen confection.

In a further embodiment the apparatus comprises one or more further sets of molds as specified above. This allows the consecutive layers to be applied in different molds and In this case only the last set of molds need to have the shape of the end product. The molds applied for the more inner layers and the core then may have different shapes which gives more versatility and freedom in the bulld-up of the confection. The dosing means will be adapted accordingly to transport each substance to the first or further sets of molds.

In this embodiment the means for positioning pieces of frozen substance will be designed to move these pieces from one set of molds to a subsequent set of molds.

A substance introduced into a mold must be frozen. Means and techniques for cooling the type of molds concerned are known per se. Contacting the molds with a low temperature liquid, e.g. by immersing the molds in a freezing liquid or spaying the outer side of the molds with a freezing substance, is a common technique that can be combined with the apparatus of the invention. However, preferably the molds Itself comprise means for cooling. Preferably these means comprise cooling medium ducts or a closed cooling medium plenum, into which the molds extend, allowing a cooling medium to contact the mold walls and bottom. The cooling ducts can be running along the outer side of the molds or the molds can be double-walled, cooling medium flowing between the walls. The molds preferably are made of a highly heat conductive material, e.g. a metal.

The inner surface of the molds can be coated to prevent the pieces of frozen substance to become fixed frozen to the inner surface. Without such coating, and even with it, pieces of frozen substance may be expected to at least locally stick to the wall. To avoid damaging the frozen pleces when lifting or removing these the outer surface of the pieces must become loose from the mold walls and bottom. In practice this requires the local temperature to be above the freezing point of the substance. In order to promote a fast release of the pieces from the molds heating can be applied to the molds in an analogous way as described above for cooling. This can be done using a separate duct system but preferably the same duct system as for the cooling is used for heating the molds. To this end the apparatus then further contains proper valve systems to alternating connecting a heating medium and a cooling medium to the part of the ducts in contact with mold walls and bottom.

Cooling and heating medium are provided by external sources that are known per se.

The apparatus according to the invention allows economically feasible production of frozen confections having multiple layers of different composition having improved hygienic quality, flavour and appearance. It is particularly fit to carry out the process of the invention as described above.

## Claims

1. Process for producing multi-layer frozen confections, comprising the steps of
a) filling a first mold, having a mold bottom, mold walls and an open mould top, at least partly with at least one first substance to be frozen;
b) freezing said at least one substance into a frozen part;
c) releasing said frozen part from the first mold;
d) positioning said frozen part in the first mold or in a further mold having a mold bottom, mold walls and an open mold top, leaving room between the frozen part and the mold bottom and mold walls;
e) feeding at least one further substance to be frozen into the first mold during or after step d) or into the further mold before, during or after step d;
f) freezing said substances into a unitary frozen confection; and
g) releasing said unitary frozen confection from the first or further mold,
wherein the molds are filled through at least one opening in the mold walls or the mold bottom.

2. Process according to claim 1, wherein the first mold is used in step d.

3. Process according to claim 1 or 2, wherein before or during step b) a peg is positioned in the first mold extending into the at least one first substance to be frozen.

4. Process according to any of claims 1 - 3 wherein steps d) to g) are repeated, the unitary frozen confection formed In step f) of claim 1 functioning as the frozen part.

5. Process according to any of claims 1 - 4, wherein a number of molds are filled at the same time from a common substance duct connected to the openings In the mold walls or bottom.

6. Apparatus for producing multi-layer frozen confections comprising at least one set of first molds each having a mold bottom, mold walls and an open mold top, the mold bottoms being positioned in one plane, the molds extending from that plane and each mold having at least one fill opening in its walls or bottom, the opening being connected to a common duct system connectable to at least one storage tank for fluid substances, the apparatus further comprising means for cooling the molds to form pieces of frozen substance in the molds and means for taking pieces of frozen substance from the mold.

7. Apparatus according to claim 6, further comprising means for dosing an amount of substance from each storage tank to the set of moulds

8. Apparatus according to claim 7, comprising one or more further sets of molds as specified in claim 6 and wherein the means for moving in an upward direction pieces of frozen substance are designed to position said pieces into the one or more further sets.

9. Apparatus according to claim 7 or 8, further comprising means to heat the molds.
